# FASCICULE DE BREVET EUROPEEN

(11) **EP 2 919 999 B1**
(45) Date de publication et mention de la délivrance du brevet: **07.11.2018**
(21) Numéro de dépôt: 13801667.0
(22) Date de dépôt: 14.11.2013
(51) Int. Cl.: B41M 5/26, B42D 25/324, B42D 25/41, B41M 3/14

(54) **PROCÉDÉ DE RÉALISATION D'UN MOTIF EN RELIEF DANS UNE CARTE PLASTIQUE MINCE**
VERFAHREN ZUR HERSTELLUNG EINES MUSTERS ALS RELIEFSCHRIFT AUF EINER DÜNNEN PLASTIKKARTE
METHOD FOR PRODUCING A PATTERN IN RELIEF IN A THIN PLASTIC CARD

(30) Priorité: 16.11.2012 FR 1260901
(43) Date de publication de la demande: 23.09.2015
(73) Titulaire: IDEMIA France, 92700 Colombes (FR)
(72) Inventeur: MOREL, Yvonnic, F-92700 Colombes (FR); KERHOMEN, Julie, F-92700 Colombes (FR)
(74) Mandataire: Santarelli
(86) Numéro de dépôt international: PCT/FR2013/052746
(87) Numéro de publication internationale: WO 2014/076428

(56) Documents cités:
- EP-A2- 0 308 904
- WO-A1-2004/009371
- WO-A1-2008/083726
- FR-A1- 2 525 007
- "Optical Document Security , Plastic Substrates ED - Rudolf L van Renesse", 1 janvier 2005 (2005-01-01), OPTICAL DOCUMENT SECURITY; [ARTECH HOUSE OPTOELECTRONICS], ARTECH HOUSE, BOSTON, MASS. [U.A.], PAGE(S) 84 - 89, XP002698880, ISBN: 978-1-58053-258-7 page 85, alinéa 3.3.1.1 - page 87

## Description

La présente invention concerne un procédé de réalisation d'un motif en relief dans une carte plastique mince, telle une carte bancaire.

Dans le domaine des cartes plastiques, il est connu de réaliser des cartes plastiques minces rigides en réalisant des assemblages de couches de polychlorure de vinyle (PVC) ou de polycarbonate (PC).

Il est connu de réaliser de telles cartes plastiques minces, de formats variés, pour réaliser des cartes portatives. Ces cartes peuvent être dotées d'unité de stockage d'information, d'unité de traitement d'information (microcircuit) ou encore être aptes à communiquer avec un dispositif électronique ou informatique externe par un moyen de communication avec ou sans contact.

Elles se caractérisent par une forme sensiblement plane limitée par des dimensions centimétriques et par une épaisseur le plus souvent inférieure au millimètre, telle que définie par la norme ISO 7816.

De telles cartes plastiques minces sont utilisées comme cartes bancaires, cartes d'identité, carte médicale, badges, cartes d'abonnement téléphonique, etc.

De nombreuses raisons peuvent justifier le besoin de réaliser au moins un motif en relief dans une telle carte plastique mince. Un élément en relief permet une différentiation en ce qu'une carte en relief se repère plus facilement, tant visuellement que tactilement. Un relief permet, par exemple au moyen du braille mais pas uniquement, une reconnaissance par un malvoyant ou par un non-voyant. La présence d'un relief peut encore permettre une prise d'empreinte. Ceci a, par exemple, longtemps été utilisé pour enregistrer les coordonnées d'un débiteur lors d'un paiement bancaire, par pression d'une carte bancaire appartenant au dit débiteur et comprenant les dites coordonnées en relief contre un récépissé sensible à la pression, tel un papier carbone. Un relief permet encore d'ajouter à une carte plastique mince un dispositif de sécurité de niveau 1, c'est-à-dire un dispositif de sécurité reconnaissable sans outil.

Il est connu jusqu'ici plusieurs méthodes permettant de réaliser un motif en relief dans une telle carte plastique mince.

Selon une première méthode, un motif en relief est réalisé par dépôt d'un vernis sur une carte plastique mince. Cette méthode est réalisée par sérigraphie. Le résultat obtenu se limite à de très faibles épaisseurs, le relief ne dépassant pas 100µm relativement à la surface externe de la carte plastique mince.

Selon une autre méthode, un motif en relief est réalisé par dépôt d'encre sur une carte plastique mince. Cette méthode est réalisée par impression jet d'encre, encore appelée dépôt à la demande (de l'anglais : «drop-on-demand»). Le résultat obtenu se limite à de très faibles épaisseurs, le relief ne dépassant pas 100µm relativement à la surface externe de la carte plastique mince.

Selon une autre méthode, un motif en relief est réalisé par carbonisation d'une couche de surface, par exemple en polycarbonate, d'une carte plastique mince. Cette méthode est typiquement réalisée au moyen d'un laser, typiquement selon une longueur d'onde de 1064 nm. Le relief ainsi obtenu n'est guère plus important et ne dépasse pas 140µm relativement à la surface externe de la carte plastique mince.

Selon une autre méthode, nommée embossage, un relief est obtenu mécaniquement au moyen d'un poinçon appliqué sur une face d'une carte plastique mince de manière à repousser la matière et produire par déformation l'apparition d'un relief en saillie sur l'autre face. Cette méthode est typiquement réalisée au moyen d'un système comprenant au moins un poinçon apparié à une matrice. Le relief ainsi obtenu est nettement plus important qu'avec les autres méthodes précédemment décrites et peut atteindre 400 à 500 µm relativement à la surface externe de la carte plastique mince. Cette méthode présente cependant au moins deux inconvénients liés à l'utilisation de poinçons. Un premier inconvénient est de limiter la liberté des motifs possibles à un jeu de poinçons/matrice. Une telle méthode est ainsi typiquement limitée à un jeu de caractères donné, dans une police donnée, pour lesquels les poinçons existent. A défaut pour tout autre motif il convient de développer un poinçon/matrice adapté. Un deuxième inconvénient est l'apparition sur la face opposé au relief saillant du même relief en creux causé par l'enfoncement du poinçon. Ce relief en creux rend peu ou pas utilisable la surface en regard d'un motif en relief. Ainsi une impression dans une telle zone devient peu ou pas lisible une fois déformée en creux par le poinçon.

FR 2 525 007 A1 divulgue un procédé de réalisation d'un motif en relief dans une carte plastique mince, comprenant les étapes suivantes: réalisation d'une superposition de couches comprenant dans l'ordre: une couche transparente, une couche spéciale conformée pour se modifier sous l'effet d'un faisceau laser, cette couche comprenant un agent moussant chimique, une surface colorée, une couche substrat; dessin au moyen d'un laser du dit motif au travers de la couche transparente.

La présente invention remédie à ces différents inconvénients en proposant un procédé de réalisation d'un relief dans une carte plastique mince, permettant d'atteindre une épaisseur de relief importante, au moins supérieure à 150 µm, en offrant une grande liberté dans le choix des motifs réalisés.

L'invention a pour objet un procédé de réalisation d'un motif en relief dans une carte plastique mince comprenant les étapes suivantes : - réalisation d'une superposition de couches comprenant dans l'ordre : une couche transparente, une couche spéciale conformée pour se modifier sous l'effet d'un faisceau laser, une surface noire, une couche substrat, - dessin au moyen d'un laser du dit motif au travers de la couche transparente.

Par « modifier » on peut comprendre que la couche spéciale peut subir une déformation structurelle qui peut être assimilée à un gonflement.

Selon l'invention la dite couche spéciale comprend au moins deux couches dont les indices de dilatation thermique sont différents.

En particulier, les indices de dilatation thermique ont au moins un rapport de 1 à 10.

A titre d'exemple, il est possible de former la couche spéciale d'un film de polyméthacrylate de méthyle et d'un film de poly téréphtalate d'éthylène (PET) dont les coefficients de dilatation thermique sont respectivement 70.2 10⁻¹²/K et 738 10⁻¹²/K (soit, en unités anglo-saxonnes, 0,000039 et 0,000410 micro pouce par pouce par degré fahrenheit ; microinch per inch per fahrenheit degree).

Selon une autre caractéristique de l'invention, la dite couche spéciale comprend un empilage de centaines de films optiques réflectifs alternant un film présentant un fort indice de réflexion et un film présentant un faible indice de réflexion.

Selon une autre caractéristique de l'invention, les épaisseurs relatives des dits films optiques réflectifs sont déterminées de manière à former un filtre d'interférence quart d'onde.

Selon une autre caractéristique de l'invention, la dite couche spéciale est formée par coextrusion des films optiques réflectifs.

Selon une autre caractéristique de l'invention, la surface noire est formée par une impression noire, sur la surface faisant face à la couche optique spéciale, d'une couche substrat non noire.

Selon une autre caractéristique de l'invention, la surface noire est formée par la surface faisant face à la couche spéciale, d'une couche substrat teintée en noir dans sa masse.

Selon une autre caractéristique de l'invention, le laser comprend un laser de type YAG utilisant une longueur d'onde de 1064 nm.

Selon une autre caractéristique de l'invention, le laser fonctionne en mode pulsé et avec des éléments graphiques de type vecteur.

Selon une autre caractéristique de l'invention, la puissance du laser est comprise entre 5 et 30 W, préférentiellement entre 10 et 20 W.

L'invention concerne également une carte en plastique comprenant
- une couche transparente,
- une couche spéciale conformée pour se modifier sous l'effet d'un faisceau laser,
- une surface noire, et
- une couche substrat.

En particulier, la carte en plastique comprend un outre un motif en relief réalisé au moyen d'un laser au travers de la couche transparente.

D'autres caractéristiques, détails et avantages de l'invention ressortiront plus clairement de la description détaillée donnée ci-après à titre indicatif en relation avec des dessins sur lesquels :
- la figure 1 présente en vue en coupe une superposition de couches formant une carte plastique mince 1 selon l'invention, apte à produire un relief simple, selon un premier mode de réalisation,
- la figure 2 présente en vue en coupe une superposition de couches formant une carte plastique mince 1 selon l'invention, apte à produire un relief double, selon un deuxième mode de réalisation,
- la figure 3 présente en vue en coupe le résultat d'un relief simple,
- la figure 4 présente en vue en coupe le résultat d'un relief double.

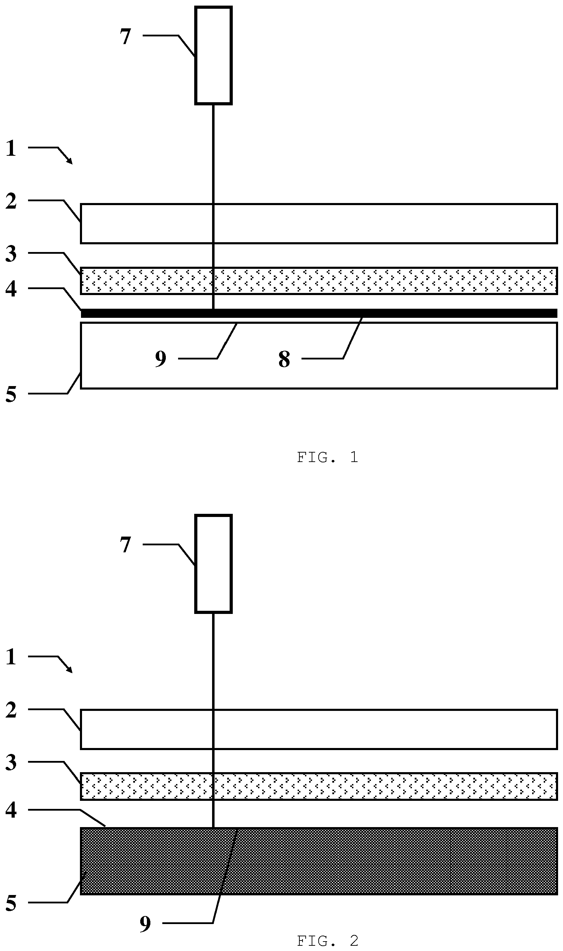

La figure 1 présente un environnement possible de mise en oeuvre du procédé selon l'invention. Il est présenté, en vue coupée, une superposition de couches 2-5 formant une carte plastique mince 1.

L'invention est mise en oeuvre par une interaction entre une couche spéciale 3 et une surface noire 4 disposées en contact et en regard, sous l'action d'un faisceau d'un laser 7.

Une carte plastique mince 1 est typiquement réalisée en empilant dans l'ordre au moins les couches suivantes, de haut en bas dans le plan de la figure 1 : une couche transparente 2, une couche spéciale 3, une surface noire 4 et une couche substrat 5.

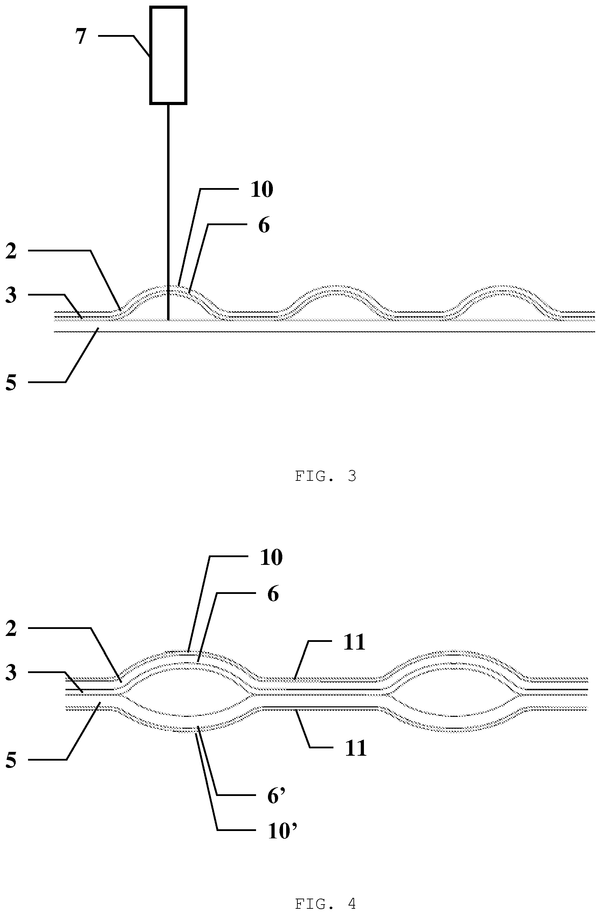

D'autres couches peuvent être ajoutées en sus. Ainsi la dite superposition de couches 2-5 peut, par exemple, encore comprendre, disposées symétriquement par rapport à la couche substrat 5, de haut en bas, une deuxième surface noire, une deuxième couche spéciale et une deuxième couche transparente. Il est encore possible, tel qu'illustré à la figure 4, de rajouter une ou deux couche(s) extrémale(s) 11 de protection (overlay en anglais), afin par exemple de protéger une impression réalisée sur la surface externe de la couche transparente 2.

Quelle que soit l'organisation de la superposition, le nombre et la topologie des couches ainsi empilées, il convient que la surface noire 4 soit en contact avec la couche spéciale 3 et que toute couche 2 disposée entre la couche spéciale 3 et l'extérieur de la carte plastique mince 1 soit transparente au rayon d'un laser 7 utilisé pour activer l'invention. Il reste possible de réaliser une impression sur ou sous la couche transparente 2. Cependant cette impression ne doit pas couvrir les zones où l'on souhaite réaliser un relief ou si cette impression couvre ces zones, elle ne doit ni les rendre opaque, ni être de couleur noire.

Une fois empilées en une superposition, les différentes couches 2-5 sont assemblées, typiquement par laminage à chaud, selon un procédé classique, afin de former une carte plastique mince 1. Cette étape d'assemblage est typiquement réalisée lors d'une première phase de fabrication, encore dénommée phase de production, lors de laquelle sont produites en masse des cartes plastiques minces 1 identiques, en usine, avec des moyens de production lourds.

A titre indicatif les épaisseurs respectives peuvent être 200 µm pour la couche transparente 2, 150 µm pour la couche spéciale 3 et 480 µm pour la couche substrat. La surface noire 4 est une couche particulière dont l'épaisseur est négligeable au regard des autres couches 1-3, 5. Ceci produit après laminage une carte plastique mince 1 de l'ordre de 700 à 800 µm d'épaisseur et préférentiellement de l'ordre de 760 µm d'épaisseur.

La création effective d'un motif 6 en relief dans une telle carte plastique mince 1 est typiquement réalisée par application d'un faisceau d'un laser 7 depuis l'extérieur de la carte plastique mince 1 vers l'interface entre la couche optique spéciale 3 et la surface noire 4 au travers de la couche transparente 2.

L'application du faisceau du laser 7 crée ponctuellement un relief 10 dans la zone d'application. Le relief 10 est constitué par une déformation locale de l'interface entre la couche spéciale 3 et la surface noire 4, la couche spéciale 3 se décollant et s'éloignant de la surface noire 4 en déformant en même temps la couche transparente 2 disposée en regard. Cette dernière déformation crée effectivement un motif 6 en relief qui fait saillie de manière perceptible depuis l'extérieur de la carte plastique mince 1.

La forme du motif 6 ainsi réalisé en relief 10 suit exactement, dans le plan de la carte plastique mince 1, le chemin parcouru par le faisceau du laser 7. Il est ainsi possible de dessiner au moyen du dit faisceau laser une grande variété de motifs 6. Cette réalisation du relief 10 par dessin au moyen d'un laser 7 permet ainsi une grande liberté de la forme du motif 6 en relief.

Cette étape de dessin qui exprime effectivement le motif 6 en relief est typiquement réalisée lors d'une deuxième phase de fabrication, encore dénommée phase de personnalisation, réalisée carte par carte. Cette étape de personnalisation, réalisée avec des moyens allégés, peut ainsi être réalisée dans l'officine d'un concessionnaire, à partir de cartes plastiques minces 1 précédemment produites en masse.

L'amplitude de relief 10 moyenne atteignable selon l'invention peut dépasser 150 µm et atteindre 900 µm relativement à la surface de la carte plastique mince 1. En considérant l'épaisseur de la carte, il est possible d'atteindre 1,4mm et il est même possible d'atteindre des valeurs égales ou supérieures à 3,3 mm.

La couche spéciale 3 est typiquement constituée de matériaux plastiques tels du polychlorure de vinyle ou PVC.

De manière connue, il est possible de réaliser des films optiques multicouches ou MOF (de l'anglais Multilayer Optical Film) qui présentent des caractéristiques visuelles intéressantes, notamment en termes de couleur.

Le principe, rappelé ici pour mémoire, consiste à empiler un grand nombre, pouvant atteindre ou même dépasser plusieurs centaines, de films optiques réflectifs. Chaque film optique réflectif est typiquement constitué d'un film réflectif mince en PVC, ou encore en polycarbonate, PC, ou encore en polyester.

Le dit empilage est réalisé en respectant une alternance d'un film présentant un fort indice de réflexion et d'un film présentant un faible indice de réflexion.

Ainsi le dit empilage crée un filtre d'interférence. Il est possible de régler le spectre de ce filtre en ajustant les épaisseurs relatives des dits films optiques réflectifs.

Sachant, par exemple, que la longueur d'onde de filtre est déterminée par l'épaisseur d'une paire de films comprenant un film présentant un fort indice de réflexion et d'un film présentant un faible indice de réflexion, il est possible de synthétiser un filtre selon un spectre déterminé. Il est ainsi avantageusement possible de former un filtre d'interférence quart d'onde.

La ou les fréquences retenues pour ce filtre détermine la couleur de la couche spéciale 3 ainsi synthétisée. Cette couleur dépend encore de la couleur du matériau situé en arrière-plan du film, le filtre réfléchissant une partie de la lumière et en transmettant une partie.

Chaque paire de films (fort indice, faible indice) est accordée en épaisseur de manière à réfléchir, par interférence constructive, la lumière dans un voisinage (+/-20nm) d'une longueur d'onde donnée. Un profil d'épaisseurs des paires de films conçu avec soin dans l'empilage étend la bande de réflexion à un spectre souhaité de longueurs d'ondes. L'intensité de réflexion augmente avec le nombre de paires de films accordés à cette longueur d'onde et avec la différence entre le fort indice de réflexion et le faible indice de réflexion des deux matériaux respectivement constitutifs d'un film de fort indice et d'un film de faible indice.

Avantageusement, les films présentant un fort indice de réflexion ainsi que les films présentant un faible indice de réflexion, sont hautement spéculaires et réflectifs.

La couche spéciale 3 est ensuite formée par coextrusion des films optiques réflectifs du dit empilage.

Une étape optionnelle d'étirement de la couche spéciale 3 peut être appliquée afin de modifier encore les propriétés optiques de la dite couche spéciale 3.

La couche spéciale 3 est ainsi physiquement étirée pour moléculairement orienter au moins un jeu de films, afin de développer une biréfringence dans ces films. Cette biréfringence apporte la plus grande partie de la différence d'indice de réflexion entre les films de fort indice et de faible indice. Lorsque couche spéciale 3 est étirée bi-axialement selon deux directions situées dans son plan, les indices de réflexion dans ce plan augmentent et la couche spéciale 3 peut réfléchir deux états de polarisation à l'instar d'un miroir. Lorsque la couche spéciale 3 est étirée uni-axialement selon une unique direction située dans le plan, la couche spéciale 3 peut efficacement réfléchir un état de polarisation. Lorsque, de plus, l'indice de réflexion du film de faible indice de réflexion correspond à l'indice de réflexion du film de fort indice de réflexion dans la direction non étirée, après étirement uni-axial, alors la couche spéciale 3 transmet sensiblement en totalité cet état de polarisation et une couche réflective linéaire polarisante est obtenue. Les matériaux des films et les conditions d'étirement peuvent être choisis afin de déterminer les indices de réflexion hors plan de manière à supprimer l'angle de Brewster. Ainsi de hautes réflectivités, supérieures à 95%, peuvent être atteintes pour un ou deux états de polarisation sur de larges angles de vision. Du fait que les différences de longueur de chemin optique entre les ondes réfléchies diminuent avec l'augmentation de l'angle relativement à la normale, les couleurs se décalent vers de longueurs d'ondes plus faibles à mesure que l'angle de vison relativement à la normale augmente. Lorsque la couche spéciale 3 est vue avec des conditions d'éclairage favorisant la réflexion, les couleurs réflectives déterminées par la bande optique de réflexion de la couche spéciale 3 sont révélées. Lorsque la couche spéciale 3 est vue avec des conditions d'éclairage favorisant la transmission au travers de la couche spéciale 3, les couleurs non réfléchies par la couche spéciale 3 sont révélées.

Il est encore connu d'utiliser un laser 7 pour modifier les propriétés optiques d'une telle couche spéciale 3. Le faisceau du laser 7 agit principalement par apport thermique. Cet apport thermique entraîne typiquement une fusion locale qui produit une homogénéisation des propriétés optiques locales. Ainsi le faisceau laser peut permettre de rendre sensiblement égaux les indices de réflexion respectifs des films présentant un fort indice de réflexion et des films présentant un faible indice de réflexion, aux endroits de la couche spéciale 3 où il est appliqué.

L'énergie du laser 7 est sélectivement absorbée selon des paquets déterminés de l'empilage multicouche par des matériaux aptes à absorber ledit laser 7 coextrudés directement dans les films optiques. L'énergie du faisceau du laser 7 ainsi absorbée vient produire un échauffement. Ce faisant elle désoriente et élimine la biréfringence de l'un des jeux de films de fort indice ou de faible indice. La biréfringence étant la cause principale de la différence d'indice de réflexion entre les deux jeux de films, ceci réduit de manière significative ou élimine totalement la réflectivité et ainsi aussi les couleurs réflectives de ces paquets.

A contrario, des films optiques multicouches ou MOF peuvent être réalisés initialement transparents et devenant réflectifs après traitement par application du laser 7.

L'action du faisceau d'un laser 7 peut ainsi, selon la configuration/constitution initiale de la couche spéciale 3 faire apparaitre ou disparaitre une propriété optique, telle une irisation, aux endroits de la couche spéciale 3 où il est appliqué.

La création d'un relief 10 est obtenue par l'action d'un faisceau d'un laser 7 sur une telle couche spéciale 3 en regard d'une surface noire 4, la dite surface noire étant disposée relativement à la couche spéciale 3 du côté opposé au laser 7. Cet effet de production d'un relief 10 a été obtenu à la surprise des opérateurs.

Des résultats de relief 10 ont été obtenus avec une amplitude de relief 10 au moins égale à 150 µm et pouvant atteindre des valeurs allant jusqu'à 900 µm. Les reliefs 10 obtenus avec un tel matériau sont très précisément déterminables en ce qu'ils suivent précisément le dessin réalisé par le faisceau du laser 7. Avantageusement encore, les reliefs 10 obtenus avec un tel matériau sont durables en ce qu'ils persistent après retrait du laser 7 et refroidissement et se maintiennent de manière définitive dans la carte plastique mince 1.

Lors des expérimentations, il a été remarqué que la présence d'une surface noire 4 en contact et en regard de la surface de la couche spéciale 3 du côté opposé à l'application du laser 7 est nécessaire à l'apparition du relief 6.

Cette surface noire 4 peut être réalisée de manières différentes avec des résultats étonnamment différents.

Selon un premier mode de réalisation, illustré à la figure 1, la dite surface noire 4 est formée par une impression noire 8, sur la surface 9 faisant face à la couche spéciale 3, d'une couche voisine de la dite couche spéciale 3, telle une couche substrat 5, cette couche n'étant pas noire dans la masse. Cette impression noire peut être réalisée par tout moyen d'impression, tel que offset, sérigraphie, etc.

Selon ce premier mode de réalisation, où la surface noire 4 est imprimée, l'application du laser 7 produit, tel qu'illustré à la figure 3, une déformation de l'interface entre la surface noire 4 et la couche spéciale 3 qui tend à séparer la surface noire 4 de la dite couche spéciale 3. La couche porteuse de la surface noire 4 ou couche substrat 5 ne se déforme pas. Au contraire la couche spéciale 3 et la couche transparente 2 se déforment conjointement. Il en résulte l'apparition d'un motif 6 en relief 10 selon le dessin réalisé par le faisceau du laser 7. Ce motif 6 en relief 10 apparaît dans la couche transparente 2.

Selon un deuxième mode de réalisation, illustré à la figure 3, la dite surface noire 4 est formée par la surface 9 faisant face à la couche spéciale 3, d'une couche substrat 5 teintée en noir dans sa masse.

Selon ce deuxième mode de réalisation, où la surface noire 4 est de matière avec la couche substrat 5 voisine, l'application du laser 7 produit, ici encore, une déformation de l'interface entre la surface noire 4 et la couche spéciale 3 qui tend à séparer la surface noire 4 de la dite couche spéciale 3. Au contraire du mode de réalisation précédent, de manière surprenante, la couche porteuse de la surface noire 4 ou couche substrat 5 se déforme. Comme précédemment la couche spéciale 3 et la couche transparente 2 se déforment conjointement. Il en résulte, comme précédemment l'apparition d'un motif 6 en relief 10 selon le dessin réalisé par le faisceau du laser 7. De plus, un motif 6' en relief 10', sensiblement symétrique et au droit du motif 6 précédent, apparait aussi simultanément dans la couche substrat 5. Ce second motif 6' s'avère comme le premier motif 6 déterminé et durable.

Il a été vu que l'application d'un faisceau d'un laser 7 est un facteur déclenchant de l'apparition d'au moins un motif 6 en relief 10.

Ainsi le laser 7 est typiquement un laser de type YAG utilisant une longueur d'onde de 1064 nm. Le laser 7 fonctionne avantageusement en mode pulsé et avec des éléments graphiques de type vecteur. La puissance du laser 7 est comprise entre 5 et 30 W, et préférentiellement entre 10 et 20 W.

## Revendications

1. Procédé de réalisation d'un motif (6) en relief (10) dans une carte plastique mince (1) comprenant les étapes suivantes :
- réalisation d'une superposition de couches comprenant dans l'ordre :
- une couche transparente (2),
- une couche spéciale (3) conformée pour se modifier sous l'effet d'un faisceau laser, cette couche spéciale comprenant au moins deux couches dont les indices de dilatation thermique sont différents,
- une surface noire (4),
- une couche substrat (5),
- dessin au moyen d'un laser (7) du dit motif (6) au travers de la couche transparente (2).

2. Procédé selon la revendication 1, où les indices de dilatation thermique ont au moins un rapport de 1 à 10.

3. Procédé selon l'une quelconque des revendications 1 et 2, où la dite couche spéciale (3) comprend un empilage de centaines de films optiques réflectifs alternant un film présentant un fort indice de réflexion et un film présentant un faible indice de réflexion.

4. Procédé selon la revendication 3, où les épaisseurs relatives des dits films optiques réflectifs sont déterminées de manière à former un filtre d'interférence quart d'onde.

5. Procédé selon la revendication 4, où la dite couche spéciale (3) est formée par coextrusion des films optiques réflectifs.

6. Procédé selon l'une quelconque des revendications 1 à 5, où la surface noire (4) est formée par une impression noire (8), sur la surface (9) faisant face à la couche spéciale (3), d'une couche substrat (5) non noire.

7. Procédé selon l'une quelconque des revendications 1 à 5, où la surface noire (4) est formée par la surface (9) faisant face à la couche spéciale (3), d'une couche substrat (5) teintée en noir dans sa masse.

8. Procédé selon l'une quelconque des revendications 1 à 7, où le laser (7) comprend un laser de type YAG utilisant une longueur d'onde de 1064 nm.

9. Procédé selon la revendication 8, où le laser (7) fonctionne en mode pulsé et avec des éléments graphiques de type vecteur.

10. Procédé selon l'une quelconque des revendications 8 ou 9, où la puissance du laser (7) est comprise entre 5 et 30 W, préférentiellement entre 10 et 20 W.

11. Carte en plastique destinée à être soumise à un faisceau laser comprenant :
- une couche transparente (2),
- une couche spéciale (3) conformée pour se modifier sous l'effet d'un faisceau laser en formant un motif en relief, cette couche comprenant au moins deux couches dont les indices de dilatation thermique sont différents,
- une surface noire (4), et
- une couche substrat (5).

12. Carte en plastique selon la revendication 11, **caractérisée en ce qu'**elle comprend un outre un motif (6) en relief (10) réalisé au moyen d'un laser (7) au travers de la couche transparente (2).

## Patentansprüche

1. Verfahren zur Herstellung eines Musters (6) als Reliefschrift (10) auf einer dünnen Plastikkarte (1), das die folgenden Schritte umfasst:
- Erzeugen einer Überlagerung von Schichten, die nacheinander umfassen:
- eine transparente Schicht (2),
- eine Spezialschicht (3), die sich unter Einwirkung eines Laserstrahls ändern kann, wobei diese Spezialschicht mindestens zwei Schichten umfasst, deren Wärmeausdehnungskoeffizienten unterschiedlich sind,
- eine schwarze Oberfläche (4),
- eine Substratschicht (5),
- Zeichnen mithilfe eines Lasers (7) des Musters (6) durch die transparente Schicht (2).

2. Verfahren nach Anspruch 1, wobei die Wärmeausdehnungskoeffizienten mindestens ein Verhältnis von 1 bis 10 aufweisen.

3. Verfahren nach einem der Ansprüche 1 und 2, wobei die Spezialschicht (3) einen Stapel aus Hunderten reflektierender optischer Folien umfasst, der abwechselnd eine Folie mit einem hohen Reflexionsindex und eine Folie mit einem niedrigen Reflexionsindex aufweist.

4. Verfahren nach Anspruch 3, wobei die relativen Dicken der reflektierenden optischen Folien derart bestimmt werden, dass sie einen Viertelwellen-Interferenzfilter bilden.

5. Verfahren nach Anspruch 4, wobei die Spezialschicht (3) durch Coextrusion der reflektierenden optischen Folien gebildet wird.

6. Verfahren nach einem der Ansprüche 1 bis 5, wobei die schwarze Oberfläche (4) durch einen schwarzen Druck (8) auf der Oberfläche (9), die der Spezialschicht (3) gegenüberliegt, einer nicht schwarzen Substratschicht (5) gebildet wird.

7. Verfahren nach einem der Ansprüche 1 bis 5, wobei die schwarze Oberfläche (4) auf der Oberfläche (9), die der Spezialschicht (3) gegenüberliegt, einer schwarz durchgefärbten Substratschicht (5) gebildet wird.

8. Verfahren nach einem der Ansprüche 1 bis 7, wobei der Laser (7) einen Laser vom Typ YAG umfasst, der eine Wellenlänge von 1.064 nm verwendet.

9. Verfahren nach Anspruch 8, wobei der Laser (7) in einem gepulsten Modus und mit Grafikelementen vom Vektor-Typ arbeitet.

10. Verfahren nach einem der Ansprüche 8 oder 9, wobei die Leistung des Lasers (7) im Bereich zwischen 5 und 30 W, vorzugsweise zwischen 10 und 20 W, liegt.

11. Plastikkarte, die mit einem Laserstrahl bestrahlt werden kann, umfassend:
- eine transparente Schicht (2),
- eine Spezialschicht (3), die sich unter Einwirkung eines Laserstrahls ändern kann, indem ein Muster als Reliefschrift gebildet wird, wobei diese Spezialschicht mindestens zwei Schichten umfasst, deren Wärmeausdehnungskoeffizienten unterschiedlich sind,
- eine schwarze Oberfläche (4), und
- eine Substratschicht (5).

12. Plastikkarte nach Anspruch 11, **dadurch gekennzeichnet, dass** sie ferner ein Muster (6) als Reliefschrift (10) umfasst, das mittels eines Lasers (7) durch die transparente Schicht (2) erzeugt wird.

## Claims

1. Process for producing a relief (10) pattern (6) in a thin plastic card (1), comprising the following steps:
- producing a superposition of layers comprising, in order:
- a transparent layer (2);
- a special layer (3) adapted to change under the effect of a laser beam, this special layer comprising at least two layers the thermal expansion coefficients of which are different;
- a black surface (4);
- a substrate layer (5);
- drawing by means of a laser (7) said pattern (6) through the transparent layer (2).

2. Process according to claim 1, wherein the thermal expansion coefficients have at least a ratio of 1 to 10.

3. Process according to either one of claims 1 and 2, wherein said special layer (3) comprises a stack of hundreds of reflective optical films alternating a film having a high reflectance index and a film having a low reflectance index.

4. Process according to claim 3, wherein the relative thicknesses of said reflective optical films are set so as to form a quarter-wave interference filter.

5. Process according to claim 4, wherein said special layer (3) is formed by coextruding the reflective optical films.

6. Process according to any one of claims 1 to 5, wherein the black surface (4) is formed by a black printing (8) on the surface (9), facing the special layer (3), of a substrate layer (5) that is not black.

7. Process according to any one of claims 1 to 5, wherein the black surface (4) is formed by the surface (9), facing the special layer (3), of a substrate layer (5) the bulk of which is colored black.

8. Process according to any one of claims 1 to 7, wherein the laser (7) comprises a YAG laser using a wavelength of 1064 nm.

9. Process according to claim 8, wherein the laser (7) functions in a pulsed mode and with vector type graphical elements.

10. Process according to either one of claims 8 or 9, wherein the power of the laser (7) is comprised between 5 and 30 W and preferably between 10 and 20 W.

11. Card made of plastic intended to be subjected to a laser beam, comprising:
- a transparent layer (2);
- a special layer (3) adapted to change under the effect of a laser beam and thereby form a relief pattern, this layer comprising at least two layers the thermal expansion coefficients of which are different;
- a black surface (4); and
- a substrate layer (5).

12. Card made of plastic according to claim 11, **characterized in that** it furthermore comprises a relief (10) pattern (6) produced by means of a laser (7) through the transparent layer (2).
